# EUROPÄISCHE PATENTSCHRIFT

(11) **EP 2 898 711 B1**
(45) Veröffentlichungstag und Bekanntmachung des Hinweises auf die Patenterteilung: **26.12.2018**
(21) Anmeldenummer: 13766927.1
(22) Anmeldetag: 17.09.2013
(51) Int. Cl.: H04W 4/00

(54) **VERFAHREN ZUR FAHRZEUGKOMMUNIKATION**
METHOD AND DEVICE FOR VEHICLE COMMUNICATION
PROCÉDÉ ET DISPOSITIF POUR COMMUNICATION POUR VÉHICULES

(30) Priorität: 19.09.2012 DE 102012216827
(43) Veröffentlichungstag der Anmeldung: 29.07.2015
(73) Patentinhaber: Continental Automotive GmbH, 30165 Hannover (DE)
(72) Erfinder: STÄHLIN, Ulrich, 65760 Eschborn (DE)
(86) Internationale Anmeldenummer: PCT/EP2013/069265
(87) Internationale Veröffentlichungsnummer: WO 2014/044671

(56) Entgegenhaltungen:
- DE-A1-102007 045 519
- "Car 2 Car Communication Consortium Manifesto", C2C-CC MANIFESTO, CAR 2 CAR COMMUNICATION CONSORTIUM , Nr. Version 1.1 28. August 2007 (2007-08-28), Seiten 1-94, XP002593958, Gefunden im Internet: URL:http://www.car-to-car.org [gefunden am 2010-07-08]
- DIKAIAKOS M D ET AL: "Location-Aware Services over Vehicular Ad-Hoc Networks using Car-to-Car Communication", IEEE JOURNAL ON SELECTED AREAS IN COMMUNICATIONS, IEEE SERVICE CENTER, PISCATAWAY, US, Bd. 25, Nr. 8, 1. Oktober 2007 (2007-10-01), Seiten 1590-1602, XP011193951, ISSN: 0733-8716, DOI: 10.1109/JSAC.2007.071008

## Beschreibung

Die Erfindung betrifft ein Verfahren und eine korrespondierende Vorrichtung zur Fahrzeugkommunikation.

In Unfallsituationen oder Gefahrensituationen ist es wichtig, dass Fahrzeuge davor gewarnt werden. Allerdings verfügt nicht jedes Fahrzeug über die Technologie mit anderen Fahrzeugen zu kommunizieren. Dies erschwert eine Kommunikation zwischen verschiedenen Fahrzeugen.

Die DE 10 2007 045 519 A1 offenbart eine Kommunikation, bei der ein erstes Fahrzeug eine Multicast-Nachricht über eine Kommunikationseinrichtung zusammen mit der GPS-Ortsbestimmung des ersten Fahrzeugs an einen Server sendet. Der Server kann entscheiden, an wen die Multicast-Nachricht weitergeleitet werden soll.

Die FR 2 926 690 A1 offenbart eine Kommunikation zwischen einem Fahrzeug und einem Kommunikationsterminal. Falls es nicht möglich ist eine Nachricht mittels einer drahtlosen Kommunikationseinrichtung des Fahrzeugs an das Kommunikationsterminal zu senden, so wird die Nachricht an eine drahtlose Kommunikationseinrichtung eines zweiten Fahrzeugs gesendet und von dort an das Kommunikationsterminal übertragen.

Die Aufgabe, die der Erfindung zugrunde liegt, ist es, ein Verfahren beziehungsweise eine korrespondierende Vorrichtung zu schaffen, um eine Fahrzeugkommunikation zwischen einem ersten, einem zweiten und einem dritten Fahrzeug zu ermöglichen.

Die Aufgabe wird gelöst durch die Merkmale des unabhängigen Patentanspruchs. Vorteilhafte Ausgestaltungen sind in den Unteransprüchen gekennzeichnet.

Die Erfindung zeichnet sich aus durch ein Verfahren beziehungsweise durch eine korrespondierende Vorrichtung zur Fahrzeugkommunikation, bei dem ein erstes Fahrzeug erste Daten bereitstellt zur Kommunikation mit einem Server. Die ersten Daten werden mittels Funktechnik unter Verwendung eines ersten Kommunikationsprotokolls an den Server übertragen. Es werden zweite Daten mittels Funktechnik unter Verwendung des ersten Kommunikationsprotokolls von dem Server an ein zweites Fahrzeug übertragen, wobei die zweiten Daten abhängig von den ersten Daten ermittelt werden. Es werden dritte Daten von dem zweiten Fahrzeug mittels Funktechnik unter Verwendung eines zweiten Kommunikationsprotokolls an ein drittes Fahrzeug übertragen, wobei die dritten Daten abhängig von den zweiten Daten ermittelt werden.

Indem erste Daten von dem ersten Fahrzeug an einen Server übertragen werden, ist es gegebenenfalls nicht notwendig, dass das erste Fahrzeug über eine Technologie verfügt um mit anderen Fahrzeugen zu kommunizieren. Der Server kann die Daten an ein zweites Fahrzeug übertragen, von dem sie an weitere Fahrzeuge weitergeleitet werden können. So können Daten an andere Fahrzeuge übertragen werden, obwohl das erste Fahrzeug nicht in der Lage ist Daten an andere Fahrzeuge zu übertragen. Zusätzlich ist es auch nicht nötig, dass der Server mit mehreren Fahrzeugen kommuniziert. Da der Server die zweiten Daten an ein Fahrzeug sendet, das mit anderen Fahrzeugen kommunizieren kann.

Gemäß einer vorteilhaften Ausgestaltung werden abhängig von gespeicherten Fahrzeugdaten des ersten Fahrzeugs die zweiten Daten von dem Server an das zweite Fahrzeug übertragen. Hierdurch kann beispielsweise von dem Server ermittelt werden, dass das Fahrzeug nicht über die Technologie verfügt, die ersten Daten an ein zweites Fahrzeug zu senden. Ist dies der Fall, oder gibt es gegebenenfalls andere Gründe, so kann der Server zweite Daten an das zweite Fahrzeug übertragen.

Gemäß einer weiteren vorteilhaften Ausgestaltung werden die zweiten Daten von dem Server an das zweite Fahrzeug abhängig von den ersten Daten übertragen.

Hierdurch kann in dem Server beispielsweise ermittelt werden, dass das erste Fahrzeug, beispielsweise aufgrund von Problemen, nicht in der Lage ist Daten an andere Fahrzeuge zu übertragen und daraufhin beispielsweise die zweiten Daten an das zweite Fahrzeug übertragen.

Gemäß einer weiteren vorteilhaften Ausgestaltung werden die ersten Daten abhängig von einem Verkehrsunfall des ersten Fahrzeugs bereitgestellt. Gerade in Unfallsituationen ist es wichtig, dass andere Fahrzeuge von dem Unfall gewarnt werden, hierdurch ist es möglich dass gerade im Unfallfall andere Fahrzeuge gewarnt werden.

Gemäß einer weiteren vorteilhaften Ausgestaltung weist das erste Fahrzeug einen Umfeldsensor auf, der dazu ausgebildet ist die Umgebung um das erste Fahrzeug zu erfassen. Abhängig von Sensordaten des Umfeldsensors wird ermittelt, ob sich eine Gefahrenstelle in der Umgebung des Fahrzeugs befindet. Falls ermittelt wird, dass sich eine Gefahrenstelle in der Umgebung des Fahrzeugs befindet, werden die ersten Daten bereitgestellt. Hierdurch können, sobald eine Gefahrenstelle von dem ersten Fahrzeug erkannt wurde, andere Fahrzeuge vor der Gefahrenstelle gewarnt werden.

Gemäß einer vorteilhaften Ausgestaltung weisen die ersten Daten die aktuelle Position des ersten Fahrzeugs auf. Hierdurch kann anderen Fahrzeugen die Position des ersten Fahrzeugs mitgeteilt werden.

Gemäß einer vorteilhaften Ausgestaltung weisen die ersten Daten Informationen zum Fahrzeugzustand des ersten Fahrzeugs auf. Hierdurch kann mitgeteilt werden, ob das erste Fahrzeug beispielsweise einen schweren Unfall hatte.

Gemäß einer weiteren vorteilhaften Ausgestaltung weisen die Daten Informationen zur Umgebung des ersten Fahrzeugs auf. Hiermit kann beispielsweise mitgeteilt werden, ob in der Umgebung des ersten Fahrzeugs ein schwerer Unfall stattgefunden hat.

Ausführungsbeispiele der Erfindung sind im Folgenden anhand der schematischen Zeichnungen näher erläutert. Es zeigen:
- Figur 1: eine Fahrzeugkommunikation und
- Figur 2: ein Ablaufdiagram.

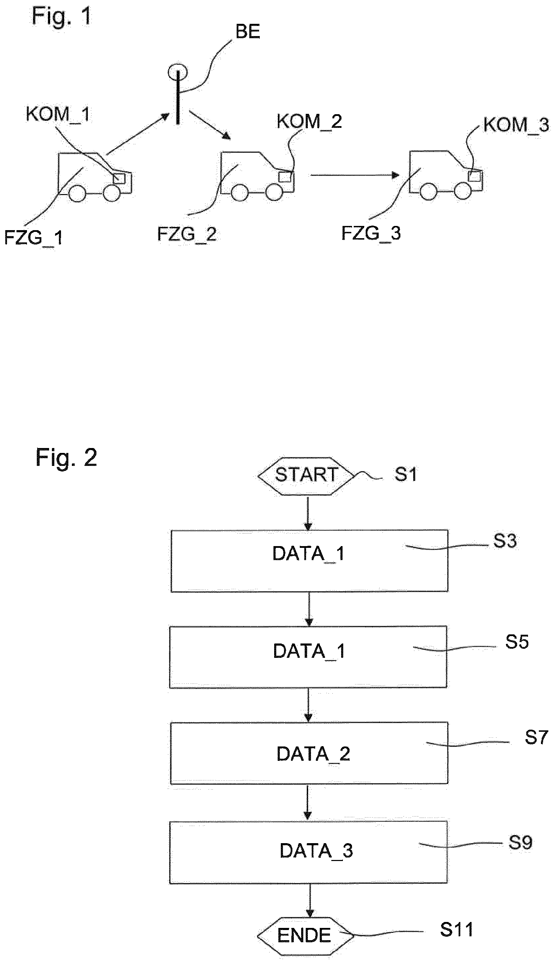

Elemente gleicher Konstruktion oder Funktion sind figurenübergreifend mit den gleichen Bezugszeichen gekennzeichnet. In einem ersten Ausführungsbeispiel (Figur 1) weist ein erstes Fahrzeug FZG_1 eine erste Kommunikationsvorrichtung KOM_1 auf. Die erste Kommunikationsvorrichtung KOM_1 weist eine Recheneinheit und einen Daten- und Programmspeicher auf. Die erste Kommunikationsvorrichtung KOM_1 kann als eine Baueinheit oder verteilt auf zwei oder mehrere Baueinheiten ausgebildet sein. Die erste Kommunikationsvorrichtung KOM_1 ist dazu ausgebildet erste Daten DATA_1 zu übertragen an einen Server BE.

Die ersten Daten DATA_1 weisen beispielsweise die aktuelle Position des ersten Fahrzeugs FZG_1 und/oder Informationen zum Fahrzeugzustand des ersten Fahrzeugs FZG_1 und/oder Informationen zur Umgebung des ersten Fahrzeugs FZG_1 und/oder Fahrzeugdaten des ersten Fahrzeugs FZG_1 auf. So können die ersten Daten DATA_1 beispielsweise Informationen zu einem Unfall des ersten Fahrzeugs FZG_1 aufweisen und/oder Informationen, ob das erste Fahrzeug FZG_1 über eine Technologie zur Fahrzeug-zu-Fahrzeug-Kommunikation aufweist. Falls das erste Fahrzeug FZG_1 einen Umfeldsensor aufweist, der dazu ausgebildet ist die Umgebung um das erste Fahrzeug FZG_1 zu erfassen, so können die ersten Daten DATA_1 alternativ oder zusätzlich Informationen über eine Gefahrenstelle in der Umgebung des ersten Fahrzeugs FZG_1 aufweisen, die von dem Umfeldsensor erfasst wurde.

Bei dem Server BE kann es sich beispielsweise um einen zentralen oder dezentralen Server BE handeln und/oder beispielsweise um ein Fahrzeug-Backend eines Fahrzeugherstellers und/oder um ein fahrzeugmarkenunabhängiges Backend. Der Server BE kann beispielsweise abhängig von gespeicherten Fahrzeugdaten des ersten Fahrzeugs FZG_1 und/oder abhängig von den ersten Daten DATA_1 ermitteln, ob es dem ersten Fahrzeug FZG_1 nicht möglich ist mit einem anderen Fahrzeug eine Kommunikation aufzubauen. So kann den gespeicherten Fahrzeugdaten gegebenenfalls die Information entnommen werden, dass das erste Fahrzeug FZG_1 nicht über die nötige Technologie verfügt, um eine Fahrzeug-zu-Fahrzeug-Kommunikation herzustellen. Alternativ oder zusätzlich können die ersten Daten DATA_1 beispielsweise die Information enthalten, dass das erste Fahrzeug FZG_1 im Moment keine Fahrzeug-zu-Fahrzeug-Kommunikation aufbauen kann, beispielsweise wegen eines Schadens oder wegen einer leeren Fahrzeugbatterie. So können in solchen Fällen oder aus anderen Gründen, von dem Server BE zweite Daten DATA_2 an eine zweite Kommunikationsvorrichtung KOM_2 eines zweiten Fahrzeugs FZG_2 übertragen werden.

Die zweite Kommunikationsvorrichtung KOM_2 weist eine Recheneinheit und einen Daten- und Programmspeicher auf. Die zweite Kommunikationsvorrichtung KOM_2 kann als eine Baueinheit oder verteilt auf zwei oder mehrere Baueinheiten ausgebildet sein. Die zweite Kommunikationsvorrichtung KOM_2 ist dazu ausgebildet die zweiten Daten DATA_2 von dem Server BE zu empfangen und dritte Daten DATA_3 an ein drittes Fahrzeug FZG_3 zu senden.

Die zweiten Daten DATA_2 werden abhängig von den ersten Daten DATA_1 ermittelt und enthalten zumindest einen Teil der ersten Daten DATA_1.

Die ersten Daten DATA_1 und die zweiten Daten DATA_2 werden mittels Funktechnik unter Verwendung eines ersten Kommunikationsprotokolls übertragen. Hierbei handelt es sich beispielsweise um GSM, UMTS, LTE, 802.11a-802.11y, Bluetooth, ZigBee, WiMax, Wifi-Direct, Infrarot und/oder ITS-G5.

Die zweite Kommunikationsvorrichtung KOM_2 des zweiten Fahrzeugs FZG_2 kann mittels Funktechnik unter Verwendung eines zweiten Kommunikationsprotokolls die dritten Daten DATA_3 abhängig von den zweiten Daten DATA_2 an eine dritte Kommunikationsvorrichtung KOM_3 eines dritten Fahrzeugs FZG_3 übertragen. Die dritten Daten DATA_3 enthalten zumindest einen Teil der zweiten Daten DATA_2 und/oder zumindest einen Teil der ersten Daten DATA_1.

Bei dem zweiten Kommunikationsprotokoll handelt es sich beispielsweise um GSM, UMTS, LTE, 802.11a-802.11y, Bluetooth, ZigBee, WiMax, Wifi-Direct, Infrarot und/oder ITS-G5, wobei das erste und das zweite Kommunikationsprotokoll unterschiedlich sind.

Ein Programm, das verteilt auf die Kommunikationsvorrichtungen der Fahrzeuge und den Server BE abgearbeitet wird, wird in einem Schritt S1 gestartet, in dem gegebenenfalls Variablen initialisiert werden können (Figur 2).

In einem darauffolgenden Schritt S3 werden die ersten Daten DATA_1 bereitgestellt. Die ersten Daten DATA_1 werden beispielsweise von dem Umfeldsensor bereitgestellt und/oder von anderen Fahrzeugsensoren und/oder von einer Steuervorrichtung des ersten Fahrzeugs FZG_1.

In einem darauffolgenden Schritt S5 werden die ersten Daten DATA_1 mittels Funktechnik unter Verwendung des ersten Kommunikationsprotokolls übertragen an den Server BE.

In einem darauffolgenden Schritt S7 werden die zweiten Daten DATA_2, die abhängig von den ersten Daten DATA_1 ermittelt wurden, mittels Funktechnik unter Verwendung des ersten Kommunikationsprotokolls übertragen von dem Server BE an das zweite Fahrzeug FZG_2.

In einem darauffolgenden Schritt S9 werden die dritten Daten DATA_3, die abhängig von den zweiten Daten DATA_2 ermittelt wurden, mittels Funktechnik unter Verwendung des zweiten Kommunikationsprotokolls übertragen von dem zweiten Fahrzeug FZG_2 an das dritte Fahrzeug FZG_3.

In einem darauffolgenden Schritt S11 wird das Programm beendet und kann gegebenenfalls wieder in dem Schritt S1 gestartet werden.

So ist es erfindungsgemäß möglich, dass das erste Fahrzeug FZG_1 beispielsweise nach einem Unfall die ersten Daten DATA_1 an ein Backend sendet. Das Backend sendet die zweiten Daten DATA_2 beispielsweise mit Informationen zu dem Unfall des ersten Fahrzeugs FZG_1 an das zweite Fahrzeug FZG_2, das beispielsweise von demselben Fahrzeughersteller ist wie das erste Fahrzeug FZG_1. Damit nun auch Fahrzeuge von anderen Fahrzeugherstellern, beziehungsweise von Fahrzeugen, die nicht mit dem Backend kommunizieren können, Informationen zu dem Unfall erhalten, sendet das zweite Fahrzeug FZG_2 die dritten Daten DATA_3 an das dritte Fahrzeug FZG_3 und gegebenenfalls an weitere Fahrzeuge.

Alternativ oder zusätzlich ist es erfindungsgemäß möglich, dass das erste Fahrzeug FZG_1 beispielsweise mittels des Umfeldsensors eine Gefahrenstelle erkennt und dem Backend mittels der ersten Daten DATA_1 dies mitteilt. Das Backend sendet daraufhin die zweite Daten DATA_2 beispielsweise mit Informationen zu der Gefahrenstelle an das zweite Fahrzeug FZG_2, das beispielsweise von demselben Fahrzeughersteller ist wie das erste Fahrzeug FZG_1. Damit nun auch Fahrzeuge von anderen Fahrzeugherstellern, beziehungsweise von Fahrzeugen, die nicht mit dem Backend kommunizieren können, Informationen zu der Gefahrenstelle erhalten, sendet das zweite Fahrzeug FZG_2 die dritten Daten DATA_3 an das dritte Fahrzeug FZG_3 und gegebenenfalls an weitere Fahrzeuge.

## Patentansprüche

1. Verfahren zur Fahrzeugkommunikation, bei dem
- ein erstes Fahrzeug (FZG_1) erste Daten (DATA_1) bereitstellt zur Kommunikation mit einem Server (BE),
- die ersten Daten (DATA_1) mittels Funktechnik unter Verwendung eines ersten Kommunikationsprotokolls an den Server (BE) übertragen werden,
- zweite Daten (DATA_2) mittels Funktechnik unter Verwendung des ersten Kommunikationsprotokolls von dem Server (BE) an ein zweites Fahrzeug (FZG_2) übertragen werden, wobei die zweiten Daten (DATA_2) abhängig von den ersten Daten (DATA_1) ermittelt werden,
**dadurch gekennzeichnet,**
**dass** dritte Daten (DATA_3) von dem zweiten Fahrzeug (FZG_2) mittels Funktechnik unter Verwendung eines zweiten Kommunikationsprotokolls an ein drittes Fahrzeug (FZG_3) übertragen werden, wobei die dritten Daten (DATA_3) abhängig von den zweiten Daten (DATA_2) ermittelt werden und bei dem abhängig von gespeicherten Fahrzeugdaten zur im ersten Fahrzeug (FZG_1) verfügbaren Technologie die zweiten Daten (DATA_2) von dem Server (BE) an das zweite Fahrzeug (FZG_2) übertragen werden.

2. Verfahren nach Anspruch 1, bei dem abhängig von gespeicherten Fahrzeugdaten des ersten Fahrzeugs (FZG_1) die zweiten Daten (DATA_2) von dem Server (BE) an das zweite Fahrzeug (FZG_2) übertragen werden.

3. Verfahren nach Anspruch 1 oder 2, bei dem abhängig von den ersten Daten (DATA_1) die zweiten Daten (DATA_2) von dem Server (BE) an das zweite Fahrzeug (FZG_2) übertragen werden.

4. Verfahren nach Anspruch 1, 2 oder 3, bei dem die ersten Daten (DATA_1) abhängig von einem Verkehrsunfall des ersten Fahrzeugs (FZG_1) bereitgestellt werden.

5. Verfahren nach einem der vorhergehenden Ansprüche, bei dem
- das erste Fahrzeug (FZG_1) einen Umfeldsensor aufweist, der dazu ausgebildet ist die Umgebung um das erste Fahrzeug (FZG_1) zu erfassen,
- abhängig von den Sensordaten des Umfeldsensors ermittelt wird, ob sich eine Gefahrenstelle in der Umgebung des ersten Fahrzeugs (FZG_1) befindet,
- falls ermittelt wird, dass sich eine Gefahrenstelle in der Umgebung des ersten Fahrzeugs (FZG_1) befindet, die ersten Daten (DATA_1) bereitgestellt werden.

6. Verfahren nach einem der vorhergehenden Ansprüche, bei dem die ersten Daten (DATA_1) die aktuelle Position des ersten Fahrzeugs (FZG_1) aufweisen.

7. Verfahren nach einem der vorhergehenden Ansprüche, bei dem die ersten Daten (DATA_1) Informationen zum Fahrzeugzustand des ersten Fahrzeugs (FZG_1) aufweisen.

8. Verfahren nach einem der vorhergehenden Ansprüche, bei dem die ersten Daten (DATA_1) Informationen zur Umgebung des ersten Fahrzeugs (FZG_1) aufweisen.

## Claims

1. Method for vehicle communication, in which
- a first vehicle (FZG_1) provides first data (DATA_1) for communicating with a server (BE),
- the first data (DATA_1) are transmitted to the server (BE) by means of radio technology using a first communication protocol,
- second data (DATA_2) are transmitted from the server (BE) to a second vehicle (FZG 2) by means of radio technology using the first communication protocol, the second data (DATA_2) being determined on the basis of the first data (DATA_1),
**characterized in that** third data (DATA_3) are transmitted from the second vehicle (FZG_2) to a third vehicle (FZG_3) by means of radio technology using a second communication protocol, the third data (DATA_3) being determined on the basis of the second data (DATA_2) and in which the second data (DATA_2) are transmitted from the server (BE) to the second vehicle (FZG_2) on the basis of stored vehicle data relating to the technology available in the first vehicle (FZG_1).

2. Method according to Claim 1, in which the second data (DATA_2) are transmitted from the server (BE) to the second vehicle (FZG_2) on the basis of stored vehicle data relating to the first vehicle (FZG_1).

3. Method according to Claim 1 or 2, in which the second data (DATA_2) are transmitted from the server (BE) to the second vehicle (FZG_2) on the basis of the first data (DATA_1).

4. Method according to Claim 1, 2 or 3, in which the first data (DATA_1) are provided on the basis of a traffic accident involving the first vehicle (FZG_1).

5. Method according to one of the preceding claims, in which
- the first vehicle (FZG 1) has an environment sensor which is designed to sense the environment around the first vehicle (FZG_1),
- it is determined, on the basis of the sensor data from the environment sensor, whether there is a hazardous area in the environment of the first vehicle (FZG_1),
- if it is determined that there is a hazardous area in the environment of the first vehicle (FZG_1), the first data (DATA_1) are provided.

6. Method according to one of the preceding claims, in which the first data (DATA_1) have the current position of the first vehicle (FZG_1).

7. Method according to one of the preceding claims, in which the first data (DATA _1) have information relating to the vehicle state of the first vehicle (FZG_1).

8. Method according to one of the preceding claims, in which the first data (DATA _1) have information relating to the environment of the first vehicle (FZG_1).

## Revendications

1. Procédé de communication de véhicule, selon lequel
- un premier véhicule (FZG 1) fournit des premières données (DATA_1) en vue de la communication avec un serveur (BE),
- les premières données (DATA_1) sont transmises au serveur (BE) par technique de radiocommunication en utilisant un premier protocole de communication,
- des deuxièmes données (DATA_2) sont transmises du serveur (BE) à un deuxième véhicule (FZG 2) par technique de radiocommunication en utilisant le premier protocole de communication, les deuxièmes données (DATA_2) étant déterminées en fonction des premières données (DATA_1),
**caractérisé en ce**
**que** des troisièmes données (DATA_3) sont transmises du deuxième véhicule (FZG_2) à un troisième véhicule (FZG_3) par technique de radiocommunication en utilisant un deuxième protocole de communication, les troisièmes données (DATA_3) étant déterminées en fonction des deuxièmes données (DATA_2), et procédé selon lequel les deuxièmes données (DATA_2) sont transmises du serveur (BE) au deuxième véhicule (FZG_2) en fonction de données de véhicule enregistrées à propos de la technologie disponible dans le premier véhicule (FZG_1).

2. Procédé selon la revendication 1, selon lequel les deuxièmes données (DATA_2) sont transmises du serveur (BE) au deuxième véhicule (FZG_2) en fonction de données de véhicule enregistrées du premier véhicule (FZG_1).

3. Procédé selon la revendication 1 ou 2, selon lequel les deuxièmes données (DATA_2) sont transmises du serveur (BE) au deuxième véhicule (FZG_2) en fonction des premières données (DATA_1).

4. Procédé selon la revendication 1, 2 ou 3, selon lequel les premières données (DATA_1) sont fournies en fonction d'un accident de circulation du premier véhicule (FZG_1).

5. Procédé selon l'une des revendications précédentes, selon lequel
- le premier véhicule (FZG_1) possède un capteur d'environnement qui est configuré pour détecter l'environnement autour du premier véhicule (FZG_1),
- la présence ou non d'un point de danger dans l'environnement du premier véhicule (FZG_1) est déterminée en fonction des données de capteur du capteur d'environnement,
- si la présence d'un point de danger dans l'environnement du premier véhicule (FZG_1) est déterminée, les premières données (DATA_1) sont fournies.

6. Procédé selon l'une des revendications précédentes, selon lequel les premières données (DATA_1) présentent la position actuelle du premier véhicule (FZG_1).

7. Procédé selon l'une des revendications précédentes, selon lequel les premières données (DATA_1) présentent des informations à propos de l'état de véhicule du premier véhicule (FZG_1).

8. Procédé selon l'une des revendications précédentes, selon lequel les premières données (DATA_1) présentent des informations à propos de l'environnement du premier véhicule (FZG_1).
